# EUROPEAN PATENT APPLICATION

(11) **EP 2 168 438 A1**
(43) Date of publication of application: **31.03.2010**
(21) Application number: 08015710.0
(22) Date of filing: 05.09.2008
(51) Int. Cl.: A23J 7/00, C11B 1/10

(54) **Composition richly containing polar lipid and method of manufacturing the same**

(71) Applicant: Meggle Japan Co., Ltd., 15-4, Ginza 1-chome Chuo-ku Tokyo (JP)
(72) Inventor: The designation of the inventor has not yet been filed
(74) Representative: Böhm, Brigitte

(57) **Abstract**

Provided is a composition richly containing polar lipid such as phospholipid (PL) and sphingolipid, containing little triglyceride (TG) or cholesterol, which contains a high content of polar lipid such as phospholipid (PL) and sphingolipid efficiently prepared from raw materials derived from milk. Also provided is a method of manufacturing the composition from materials derived milk containing polar lipids such as phospholipid (PL) and sphingolipid, comprising performing supercritical extraction with carbon dioxide used as a supercritical fluid and ethanol added as an entrainer at a low ethanol concentration, and then performing high-pressure ethanol extraction at enhanced ethanol concentration, with an extraction temperature adjusted in a stepwise fashion while maintaining carbon dioxide in a supercritical state. The present invention allows efficient production of a composition containing little triglyceride (TG) or cholesterol and richly containing polar lipid such as phospholipid (PL) and sphingolipid, and further fractionation of some polar lipids.

## Description

### TECHNICAL FIELD

The present invention relates to methods of manufacturing compositions richly containing phospholipids and sphingolipids, which are polar lipids derived from milk, using a high-pressure ethanol extraction technology with carbon dioxide under supercritical conditions, and to compositions richly containing polar lipids. Compositions richly containing polar lipids according to the present invention may be widely used in the fields of: food products such as functional foods, breastmilk substitutes, and high density liquid diets; pharmaceuticals such as enteral nutrients and substrates for drug delivery systems; animal feed for domestic/companion animals and cultured fish; as well as cosmetics and chemical products.

### BACKGROUND ART

In compositions richly containing polar lipids, soybean lecithin and egg yolk lecithin as phospholipid compositions derived from natural products, are generally widely used for emulsifiers, etc., in manufacturing food products. In recent years, phosphatidylserines (PS) provided by enzymatic treatment of phosphatidylcholines (PC) of soybean lecithin and serine, and phospholipids derived from marine products, including polyunsaturated fatty acids such as docosahexaenoic acid (DHA) have been used in functional foods. It has been also reported and noted that milk richly contains: glycerophospholipids such as phosphatidylcholine (PC), phosphatidylethanolamine (PE), phosphatidylserine (PS), phosphatidylinositol (PI), and plasmalogen-type PE; sphingophospholipids such as sphingomyelin (SM); and sphingoglycolipids such as glucosylceramide (GlcCer), lactosylceramide (LacCer), and ganglioside, and that these polar lipids have various physiological functions such as cerebral nerve functions, motor functions, cell differentiation/apoptosis, immunological functions, phylactic functions, and antiobesitic functions including inhibition of accumulation of visceral fat. In addition, recently, functional researches on phospholipids and sphingolipids constituting the cell membranes of animals and plants as a microdomain have been pursued, and there has been a growing interest in their relations with signaling, induced differentiation/apoptosis of cells, etc.

General methods of preparing phospholipids include an extraction method using an organic solvent. Soybean lecithin (phospholipid) is prepared by, for example, a method of extracting raw oil from soybean flakes with an organic solvent such as hexane, followed by drying oil cake generated in a degumming process to obtain a crude phospholipid fraction. Egg yolk lecithin (phospholipid) is prepared by, for example, a method of using an organic solvent such as ethanol, propanol, or dimethyl ether to extract crude fat from yolk powder and using acetone to obtain a crude phospholipid fraction (Journal of Japan Oil Chemists' Society, 41(9), (1992), 211).

In addition, phospholipid derived from milk is extracted/fractionated from powder containing polar lipid such as buttermilk powder, butter serum powder, or a whey protein concentrate, using an organic solvent such as chloroform, methanol, ether, acetone, hexane, ethanol, or diethyl ether (Japanese Patent Laid-Open No. 1991-47192). Further examples include a method of subjecting a hexane solution including lipid from milk, containing triglyceride (TG) and polar lipid, to a silicic acid column to adsorptively remove TG (Japanese Patent Laid-Open No. 1995-173182), and a method of dissolving a phospholipid fraction derived from milk in ether to separate each phospholipid component with a hexane/methanol/water mixture as an eluent using a simulated moving bed type chromatographic separator filled with silica gel (Japanese Patent Laid-Open No. 1993-132490).
Furthermore, ganglioside, which is sphingolipid from milk, is extracted by, for example, a method of adjusting an ethanol concentration in a stepwise fashion to obtain a concentrate from ganglioside-containing powder such as butter serum (Japanese Patent Laid-Open No. 2000-234001).

Methods of extracting polar lipid by a supercritical fluid include a method comprising the two steps of: initially extracting and removing triglyceride (TG) from soybean flakes through supercritical extraction (temperature of 80°C, pressure of 32 MPa) using carbon dioxide (CO₂); and then adding ethanol as an entrainer at 10% to supercritically extract phospholipid (PL) (temperature of 70°C, pressure of 68. 9 MPa) (Journal of Supercritical Fluids, 14, (1999), 87-93). Similarly, a method is also included comprising the two steps of: initially extracting and removing triglyceride (TG) from yolk powder through supercritical extraction (temperature of 45°C, pressure of 41 MPa) using carbon dioxide (CO₂); and then adding 0.5 mol of ethanol as an entrainer to supercritically extract phospholipid (PL) (temperature of 60°C, pressure of 41. 4 MPa) (Journal of Supercritical Fluids, 30, (2004), 303-313). Furthermore, a method is included comprising the two steps of: initially adding ethanol as an entrainer at 5% to extract and remove triglyceride (TG) through supercritical extraction (temperature of 35°C, pressure of 17.7 MPa) using carbon dioxide (CO₂); and then adding ethanol at 20% to supercritically extract phospholipid (PL) containing polyunsaturated fatty acids (PUFA) such as docosahexaenoic acid (DHA) from fish eggs (temperature of 35°C, pressure of 17.7 MPa) (Journal of Oleo Science,Vol53,No.9,417-424(2004)).

Supercritical extraction methods from materials derived from milk containing polar lipids include a method of using whey containing a milk fat globule membrane (MFGM) substance to prepare a concentrate to be powdered, performing supercritical extraction (temperature of 45 to 55°C, pressure of 300 to 500 kg/cm²) using carbon dioxide as a supercritical fluid to remove triglyceride (TG) and cholesterol, and then adding ethanol as an entrainer at 20 to 100% to carbon dioxide to supercritically extract phospholipid (PL) (temperature of 45 to 55°C, pressure of 300 to 500 kg/cm²) (Japanese Patents Laid-Open No. 1995-87886 and No. 2005-336230; Journal of Dairy Science, Vol. 53, 86, (2003), 2297-2307).

In addition, a method using butter serum powder rich in a milk fat globule membrane (MFGM) substance is included comprising initially using carbon dioxide as a supercritical fluid to perform supercritical extraction (temperature of 40 to 80°C, pressure of 25 MPa) to remove triglyceride (TG) and cholesterol, and then extracting phospholipid through subcritical extraction using carbon dioxide (temperature of 304.2 to 374 K, pressure of 73.2 bar or higher) or subcritical extraction using dimethyl ether (temperature of 273 to 373 K, pressure of 10 bar or higher) (WO2006/041316).

### DISCLOSURE of INVENTION

In the above-described solvent extraction methods from materials derived from milk, soybean, yolk, or the like containing polar lipids, however, various organic solvents such as chloroform, methanol, ether, acetone, hexane, ethanol, and diethyl ether are used to perform extraction/fractionation under an atmospheric pressure, and preparation of extracts requires substantially complete removal of used organic solvents. These component fractionation processes have been complicated, and have had a lot of problems in efficient industrial production and safer preparation of extracts. In contrast, in supercritical extraction methods from materials derived from milk containing polar lipids, triglyceride (TG) or cholesterol cannot be completely removed in a first step, and the extract obtained through the subsequent supercritical extraction with ethanol added as an entrainer contains about 50% of triglycerides (TG), and no extract containing 100% of polar lipids such as phospholipids (PL) or sphingolipids has been obtained. In addition, the maximum amount of the ethanol added as an entrainer has been 50%.

Similarly, soybean flakes and yolk powder have been used as raw materials to prepare phospholipid through supercritical extraction with ethanol added as an entrainer, in which the amount of the added ethanol has been 20% or less. As described above, extraction conditions depend on the state of starting materials, the compositions of lipids and their fatty acids, and ingredients such as mixed proteins.

The amount of added ethanol has been 50% or less with respect to that plus carbon dioxide, where ethanol has been used as an entrainer in supercritical carbon dioxide extraction as described above, and no extraction method has not been shown in combination between a supercritical extraction method at an additive amount of more than 50% and an ethanol extraction method under a high pressure.

Thus, the object of the present invention is to provide a composition richly containing polar lipid, containing little triglyceride (TG) or cholesterol, which contains a high content of polar lipid such as phospholipid (PL) and sphingolipid efficiently prepared from raw materials derived from milk, by solving the above-described problems with conventional technologies, using a novel method in combination between a supercritical extraction technology with carbon dioxide with ethanol added as an entrainer at a low concentration, and a high-pressure ethanol extraction technology with carbon dioxide, which is a supercritical fluid, used as an extraction accelerator.

As a result of pursuing extensive research on a method of efficiently preparing a composition richly containing polar lipid derived from milk in order to solve the above-described problems, the present inventor arrived at the present invention in finding that a composition that contains little triglyceride (TG) and/or cholesterol and richly contains polar lipid such as phospholipid (PL) and sphingolipid can be provided by performing supercritical extraction with carbon dioxide used as a supercritical fluid and ethanol added as an entrainer at a low ethanol concentration, and then in performing high-pressure ethanol extraction at enhanced ethanol concentration, with an extraction temperature adjusted in a stepwise fashion while maintaining carbon dioxide in a supercritical state. Ethanol concentration refers to the volume percent of ethanol to the total amount of the ethanol and carbon dioxide. Low ethanol concentration refers to the concentration at which ethanol is added so that the ethanol is 1 to 10% with respect to the total amount of the ethanol and carbon dioxide. Preferably, the concentration of ethanol is less than 10%. High ethanol concentration refers to the concentration at which ethanol is added so that the ethanol is 50 to 99% with respect to the total amount of the ethanol and carbon dioxide.

Thus, the present invention provides a composition richly containing polar lipid derived from milk, wherein the total content of triglyceride (TG) and cholesterol is 5% or less and the content of polar lipid is 95% or more in the total solid, and a manufacturing method thereof comprising performing supercritical extraction with carbon dioxide used as a supercritical fluid and ethanol added as an entrainer at a low ethanol concentration, and then performing high-pressure ethanol extraction at enhanced ethanol concentration, with an extraction temperature adjusted in a stepwise fashion while maintaining carbon dioxide in a supercritical state.

Most of triglyceride (TG) and cholesterol is removed from materials derived from milk containing polar lipid by initially adding ethanol, so that an ethanol concentration is 1 to 10% (v/v), preferably less than 10%, to perform supercritical extraction at an extraction pressure of 7.4 MPa or higher and an extraction temperature ranging from 31 to 45°C. Next, most of phospholipids (PL), sphingolipids, etc., can be collected to obtain a polar lipid composition by performing high-pressure ethanol extraction at an extraction temperature ranging from 31 to 45°C, preferably 32 to 44 °C, with an ethanol concentration enhanced to 50 to 99% (v/v) while maintaining carbon dioxide in a supercritical state. In addition, slightly remaining phosphatidylserine (PS) and phosphatidylinositol (PI) can be collected by maintaining the ethanol concentration at a high level and increasing the extraction temperature to 45 to 75°C while maintaining carbon dioxide in a supercritical state. A combination of these extraction fractions also provides a composition richly containing polar lipid derived from milk, which contains little triglyceride (TG) or cholesterol.

The invention allows efficient production of a composition containing little triglyceride (TG) and/or cholesterol and richly containing polar lipid such as phospholipid (PL) and sphingolipid, which has been difficult to be provided by conventional supercritical extraction methods, and further fractionation of some polar lipids by using a novel method in combination between a supercritical extraction technology with carbon dioxide with ethanol added as an entrainer at a low concentration, and a high-pressure ethanol extraction technology with carbon dioxide, which is a supercritical fluid, used as an extraction accelerator. Compositions richly containing polar lipid derived from milk, provided by a manufacturing method according to the present invention, may be widely used in the fields of: food products such as functional foods, breastmilk substitutes, and high density liquid diets; pharmaceuticals such as enteral nutrients and substrates for drug delivery systems; animal feed for domestic/companion animals and cultured fish; as well as cosmetics and chemical products.

### BEST MODES FOR CARRYING OUT THE INVENTION

As used herein, "composition richly containing polar lipid derived from milk" means a composition containing a high concentration of polar lipid such as phospholipid or sphingolipid included in milk. Phospholipid (PL) included in milk refers to glycerophospholipid such as phosphatidylcholine (PC), phosphatidylethanolamine (PE), phosphatidylserine (PS), phosphatidylinositol (PI), plasmalogen-type phosphatidylethanolamine, or plasmalogen-type phosphatidylcholine; and sphingophospholipid such as sphingomyelin (SM). Sphingolipid refers to sphingophospholipid such as sphingomyelin (SM); and sphingoglycolipid such as glucosylceramide (GlcCer), lactosylceramide (LacCer) or ganglioside.

Materials derived from milk containing polar lipids to be used as raw materials in the production according to the present invention refer to, but are not particularly limited to, dry matters (powders) containing fat globule membrane ingredients. These dry matters include, for example, butter serum powder and its concentrate or separated matter; buttermilk powder and its concentrate or separated matter; whole milk powder; a whey protein concentrate (WPC); and the concentrate or separated matter of a fat globule membrane, wherein, without any particular limitation, the extraction efficiency in production is better at a higher fat content or a lower lactose content, and wherein the fat globule membrane concentrate, the butter serum concentrate, and the buttermilk concentrate are preferably used.
Milk, as used herein, is one derived from mammals such as cow, goat, sheep, horse, or human, wherein, without any particular limitation, from the viewpoint of industrial production, materials from the milk of cow, goat, or sheep are preferably used, and the cow's milk is most preferably used.

The characteristics of the method of manufacturing a composition richly containing polar lipid derived from milk according to the present invention and of the composition are described in detail below.

The content of polar lipid such as phospholipid or sphingolipid in butter serum powder is about 5% (W/W), which is about 10 times higher than that in buttermilk powder. This butter serum, which is a by-product generated in the production of AMF (anhydrous milk fat; so-called butter oil), is an aqueous phase exhausted when a cream with 40 to 50% of fat obtained from raw milk by centrifugation is further centrifuged to prepare a high-fat cream with 60 to 80% of fat and its phase is inverted by heat and shear treatments, and differs from a buttermilk by-produced in butter production. Such butter serum powder, as thus prepared, may be used for raw materials. More preferably, a powdered concentrate may be used which is produced by treating the resultant butter serum with a micro filtration membrane (MF) or an ultrafiltration membrane (UF) to concentrate lipids and proteins (see WO2002/34062 and WO2008/009636). A concentrate may be also used which is obtained by removing some proteins included in the butter serum by isoelectric precipitation, followed by being treated with a micro filtration membrane (MF) or an ultrafiltration membrane (UF) (see Japanese Patent Laid-Open No. 2007-89535).

These concentrates can be powdered by a spray dryer which is generally utilized in milk treatment, but may be powdered using a drying method such as freeze or vacuum drying.

Particularly preferred is is an extraction process using a butter serum concentrate powder containing 20 to 70% of total fat and 10 to 40% of polar lipid as raw materials.

The process is a manufacturing method comprising performing supercritical extraction with carbon dioxide used as a supercritical fluid and ethanol added as an entrainer at a low ethanol concentration, and performing high-pressure ethanol extraction with carbon dioxide, which is a supercritical fluid, used as an extraction accelerator. It is noted that extraction operation is preferably performed at a constant extraction pressure in light of extraction efficiency, but the extraction pressure may be also regulated at appropriate times.

Initially, in a first step, most of triglyceride (TG) and cholesterol is removed by adding ethanol, so that an ethanol concentration is 1 to 10% (v/v), to perform supercritical extraction at an extraction pressure of 7.4 MPa or higher and an extraction temperature ranging from 31 to 45°C preferably 32 to 44 °C. Although triglyceride (TG) can be removed without any ethanol added, treatment efficiency is reduced, e.g., a longer treatment time taken, and sterol such as cholesterol cannot be removed completely. The preferable ethanol concentration is about 3 to 8%. At 10%, phosphatidylcholine (PC) is slightly extracted and removed. In addition, since a significant increase in an extraction rate can be hardly seen at a high extraction temperature of higher than 60°C under an extraction pressure of 50 MPa or less, treatment at a temperature of 35 to 45°C is preferred under a pressure range from 15 to 50 MPa. In contrast, in a high-pressure treatment at an extraction pressure of higher than 50 MPa, an extraction rate is significantly increased at 60°C or higher, but treatment at 35 to 45°C is preferred in light of the optimal temperature of the subsequent extraction process and the occurrence of thermal denaturation. This treatment allows the removal of about 100% of triglyceride and 95% or higher of sterols such as cholesterol.

Next, in a second step, most of phospholipids (PL), sphingolipids, etc., can be collected to obtain a polar lipid composition by performing high-pressure ethanol extraction at an extraction temperature ranging from 31 to 45°C, with ethanol added at a high ethanol concentration so that an ethanol concentration is 50 to 99% (v/v) while maintaining carbon dioxide in a supercritical state. The preferable ethanol concentration is about 65 to 90%. For the extraction temperature, treatment at 35 to 45°C is preferred under a pressure range from 15 to 50 MPa. In contrast, in a high-pressure treatment at an extraction pressure of higher than 50 MPa, the extraction temperature of 35 to 45°C is also preferable, but that of higher than 60°C is not preferable because the extraction rates of phosphatidylcholine (PC) and sphingomyelin (SM) decrease. It is noted that an ethanol concentration can be reduced to 40 to 65% in a high-pressure treatment at an extraction pressure of higher than 50 MPa. This treatment provides an extract containing little sterol such as triglyceride or cholesterol, from which 70% of phospholipid and sphingolipid is collected.

Furthermore, in a third step, slightly remaining phosphatidylserine (PS) and phosphatidylinositol (PI) can be collected by maintaining the ethanol concentration at a high level and increasing the extraction temperature to 45 to 75°C while maintaining carbon dioxide in a supercritical state. The preferable ethanol concentration is about 65 to 90%. Treatment is preferably performed at 55 to 70°C at an extraction pressure of 50 MPa or lower, particularly 15 to 50 MPa. In contrast, in a high-pressure treatment at an extraction pressure of higher than 50 MPa, the extraction temperature may be decreased to 50 to 65°C. This treatment provides an extract containing about 100% of polar lipid, from which most of phosphatidylserine (PS) and phosphatidylinositol (PI) is collected.

A combination of these extracts obtained in the second and third steps also provides a composition richly containing polar lipid derived from milk, which contains little triglyceride (TG) or cholesterol. Powders following an extraction process contains little lipid, and can be provided as a composition with a fat globule membrane protein highly concentrated.

### EXAMPLES

The present invention is more specifically described in the following examples, which are not to be construed as limiting the technological scope of the present invention.

### Example 1

### 1. Preparation of butter serum concentrate powder

A micro filtration membrane (MF) with a pore size of 0.1 µm was used to concentrate a butter serum by-produced in manufacturing AMF from high-fat cream, and the fluid concentrate was subj ected to spray drying to prepare butter serum concentrate powder (hereinafter referred to as concentrate powder).

The total fat content in 100 g of the concentrate powder was 38 g, consisting of 14 g of sterols such as triglyceride and cholesterol, 19 g of glycerophospholipid and sphingophospholipid, and 5 g of other polar lipids such as sphingoglycolipid. The content of each polar lipid was calculated by scraping off each polar lipid ingredient using thin-layer chromatography to perform lipid extraction, followed by determining a phosphorous content using an absorptiometric method.

With 150g of the concentrate powder as raw materials, three-step extraction operations were performed comprising: performing supercritical extraction with carbon dioxide used as a supercritical fluid and ethanol added as an entrainer at a low ethanol concentration, and then performing high-pressure ethanol extraction at enhanced ethanol concentration, with an extraction temperature adjusted in a stepwise fashion while maintaining carbon dioxide in a supercritical state

### 2. Extraction and removal of triglyceride (TG) and cholesterol (first step)

In a first step, with ethanol added to the concentrate powder prepared as described above so that the ethanol concentration was 7% (v/v), supercritical extraction was performed at an extraction pressure of 30 MPa and an extraction temperature of 40°C to yield 20.5 g of an extract (as a dry matter with ethanol removed).

In this extraction process, about 98% of triglyceride (TG) and cholesterol included in 150 g of the concentrate powder was extracted and removed. In addition, the extract contained no polar lipid such as phospholipid or sphingolipid.

### 3. Extraction of composition containing PC, PE and SM (second step)

Next, in a second step, ethanol was added to the concentrate powder containing a high concentration of polar lipid obtained by removing triglyceride (TG) and cholesterol from the concentrate powder in the first step, so that an ethanol concentration was a high level of 80% (v/v), to perform high-pressure ethanol extraction at an extraction pressure of 30 MPa and an extraction temperature of 40°C while maintaining carbon dioxide in a supercritical state.

Polar lipid such as phospholipid (PL) and sphingolipid could be collected to obtain 27.0 g of a polar lipid extract (as a dry matter with ethanol removed). The extract contained 7.8 g (about 29%) of phosphatidylcholine (PC), 6.5 g (about 24%) of phosphatidylethanolamine (PE), and 5.6 g (about 21%) of sphingomyelin (SM).

### 4. Extraction of composition containing PE, PS, and PI (third step)

In a final third step, high-pressure ethanol extraction was performed for the concentrate powder containing polar lipid obtained by removing most of polar lipid in the second step, at an extraction pressure of 30 MPa and an ethanol concentration of 80%, with the extraction temperature increased to 60°C while maintaining carbon dioxide in a supercritical state.

Remaining phosphatidylethanolamine (PE), phosphatidylserine (PS), and phosphatidylinositol (PI) could be collected from the concentrate powder containingpolar lipid, obtained by removing most of polar lipids in the second step, to provide 7.0 g of a polar lipid extract (as a dry matter with ethanol removed). The extract contained 0.7 g (about 10%) of phosphatidylethanolamine (PE), 2.3 g (about 36%) of phosphatidylserine (PS), and 1.7 g (about 24%) of phosphatidylinositol (PI).

The total amount of the extracts obtained in the steps 2 and 3 was 34.0 g, containing 33.5 g (about 98.5%) of polar lipid. After the three-step extraction processes, followed by drainage of only supercritical carbon dioxide to completely remove ethanol, in about 95 g of a dried and hardened residual powder, only 2 g (about 2%) of lipid was included, and a fat globule membrane protein content could be increased to about 80% (the protein content was determined by the Kjeldahl method).

### Example 2

### 1. Preparation of whey buttermilk concentrate powder

An ultrafiltration membrane (UF) having a molecular weight cut-off of 10 kDa was used to concentrate whey buttermilk by-produced in manufacturing whey butter from whey cream obtained by centrifuging cheese whey in a whey separator, and the fluid concentrate was subjected to spray drying to prepare whey buttermilk concentrate powder (hereinafter referred to as concentrate powder).

The total fat content in the powder is 25%, consisting 7% of sterols such as triglyceride and cholesterol, 15% of glycerophospholipid and sphingophospholipid, and 2% of other polar lipids such as sphingoglycolipid.

With 100g of the powder as raw materials, three-step extraction operations were performed comprising: performing supercritical extraction with carbon dioxide used as a supercritical fluid and ethanol added as an entrainer at a low ethanol concentration, and then performing high-pressure ethanol extraction at enhanced ethanol concentration, with an extraction temperature adjusted in a stepwise fashion while maintaining carbon dioxide in a supercritical state

### 2. Extraction and removal of triglyceride (TG) and cholesterol (first step)

In a first step, with ethanol added to the concentrate powder prepared as described above so that the ethanol concentration was 10% (v/v), supercritical extraction was performed at an extraction pressure of 50 MPa and an extraction temperature of 35°C to yield 7.1 g of an extract.

In this extraction process, about 100% of 7 g of triglyceride (TG) and cholesterol included in 100 g of the concentrate powder was extracted and removed. In addition, the extract contained 0.1 g of phosphatidylcholine (PC).

### 3. Extraction of composition containing PC, PE, and SM (second step)

Next, in a second step, ethanol was added to the concentrate powder containing a high concentration of polar lipid obtained by removing triglyceride (TG) and cholesterol from the concentrate powder in the first step, so that an ethanol concentration was a high level of 65% (v/v), to perform high-pressure ethanol extraction at an extraction pressure of 50 MPa and an extraction temperature of 35°C while maintaining carbon dioxide in a supercritical state.

Polar lipid such as phospholipid (PL) and sphingolipid could be collected to obtain 14.5 g of a polar lipid extract (as a dry matter with ethanol removed). The extract contained 4.1 g (about 28%) of phosphatidylcholine (PC), 3.5 g (about 24%) of phosphatidylethanolamine (PE), and 3.5 g (about 24%) of sphingomyelin (SM).

### 4. Extraction of composition containing PE, PS, and PI (third step)

In a final third step, high-pressure ethanol extraction was performed for the concentrate powder containing polar lipid obtained by removing most of polar lipid in the second step, at an extraction pressure of 50 MPa and an ethanol concentration of 65%, with the extraction temperature increased to 55°C while maintaining carbon dioxide in a supercritical state.

Remaining phosphatidylethanolamine (PE), phosphatidylserine (PS), and phosphatidylinositol (PI) could be collected from the concentrate powder containing polar lipid, obtained by removing most of polar lipids in the second step, to provide 3.0 g of a polar lipid extract (as a dry matter with ethanol removed). The extract contained 0.3 g (about 10%) of phosphatidylethanolamine (PE), 1.0 g (about 33%) of phosphatidylserine (PS), and 0.8 g (about 27%) of phosphatidylinositol (PI).

The total amount of the extracts obtained in the steps 2 and 3 was 17.5 g, of which about 99% was polar lipid.

### Industrial Applicability

The present invention provides a composition richly containing polar lipid derived from milk, wherein the total content of triglyceride (TG) and cholesterol is 5% or less and the content of polar lipid is 95% or more in the total solid, and a manufacturing method thereof comprising: performing supercritical extraction with carbon dioxide used as a supercritical fluid and ethanol added as an entrainer at a low concentration, and performing high-pressure ethanol extraction with carbon dioxide which is a supercritical fluid used as an extraction accelerator; and allows industrially stable and efficient production.

Compositions richly containing polar lipid derived from milk, provided by the manufacturing method according to the present invention, may be widely used in the fields of: food products such as functional foods, breastmilk substitutes, and high density liquid diets; pharmaceuticals such as enteral nutrients and substrates for drug delivery systems; animal feed for domestic/companion animals and cultured fish; as well as cosmetics and chemical products.

## Claims

1. A method of manufacturing a composition richly containing polar lipid such as phospholipid (PL) and sphingolipid, which contains little triglyceride (TG) or cholesterol, from materials derived from milk containing polar lipids such as phospholipid (PL) and sphingolipid, comprising performing supercritical extraction with carbon dioxide used as a supercritical fluid and ethanol added as an entrainer at a low concentration, and then performing high-pressure ethanol extraction at enhanced ethanol concentration, with an extraction temperature adjusted in a stepwise fashion while maintaining carbon dioxide in a supercritical state.

2. The manufacturing method according to claim 1, wherein, in a supercritical extraction process, ethanol is initially added, so that an ethanol concentration is 1 to 10% (v/v), to perform supercritical extraction at an extraction pressure of 7.4 MPa or higher and an extraction temperature ranging from 31 to 45°C to remove most of triglyceride (TG) and cholesterol, and ethanol is then added, so that an ethanol concentration is a high level of 50 to 99% (v/v), while maintaining carbon dioxide in a supercritical state, to perform high-pressure ethanol extraction at an extraction temperature ranging from 31 to 45°C to prepare the composition richly containing polar lipid.

3. The manufacturing method according to claim 1, wherein, after the high-pressure ethanol extraction process with the carbon dioxide maintained in the supercritical state according to claim 2, high-pressure ethanol extraction is performed with the ethanol concentration maintained at a high level and the extraction temperature increased to 45 to 75°C, while maintaining the carbon dioxide in the supercritical state, to prepare the polar lipid composition.

4. A method of manufacturing a composition richly containing polar lipid such as phospholipid (PL) and sphingolipid, comprising the steps of:
i) adding ethanol, so that an ethanol concentration is 1 to 10% (v/v), to perform supercritical extraction from materials derived milk containing polar lipid such as phospholipid (PL) and sphingolipid, at an extraction pressure of 7.4 MPa or higher and an extraction temperature ranging from 31 to 45°C;
ii) adding ethanol, so that an ethanol concentration is a high level of 50 to 99% (v/v), while maintaining carbon dioxide in a supercritical state, to perform high-pressure ethanol extraction at an extraction temperature ranging from 31 to 45°C; and
iii) performing high-pressure ethanol extraction with the ethanol concentration maintained at a high concentration and the extraction temperature increased to 45 to 75°C, while maintaining the carbon dioxide in the supercritical state,
wherein the composition richly containing polar lipid contains little triglyceride (TG) or cholesterol.

5. A polar lipid composition manufactured by the method according to any one of claims 2 to 4.

6. A polar lipid composition with a polar lipid constitution adjusted by appropriately mixing polar lipid compositions manufactured by the method according to any one of claims 2 to 4.
